# EUROPEAN PATENT APPLICATION

(11) **EP 2 016 822 A1**
(43) Date of publication of application: **21.01.2009**
(21) Application number: 08425468.9
(22) Date of filing: 04.07.2008
(51) Int. Cl.: A01K 15/02

(54) **Dog collar**

(30) Priority: 06.07.2007 IT MN20070030
(71) Applicant: Martinelli, Adriano, 46029 Suzzara (IT)
(72) Inventor: Martinelli, Adriano, 46029 Suzzara (IT)
(74) Representative: Petazzi, Guido

(57) **Abstract**

The invention relates to a dog collar, characterised by the fact the said collar comprises an electronic device with relative power supply device, connected by means of a flexible strap to a vibratory device designed to lie in contact with the dog's body and receive, via a cable, 'come' and 'stop' commands via the said electronic device.

## Description

The invention relates to a dog collar.

There exist commonly known dog collars which comprise electronic equipment designed to transmit an electric stimulus which persuades dogs to assume certain behaviours in different situations, such as making them return to the handler if they stray too far, or stopping undesired behaviour like barking.

The aim of the present invention is to realise a collar of the type described which is not in the slightest bit harmful to the integrity of the dog to which it is applied.

The aim set is achieved by a dog collar according to the invention, characterised by the fact the said collar comprises an electronic device with relative power supply device, connected by means of a flexible strap to a vibratory device designed to lie in contact with the dog's body and receive, via a cable, 'here' and 'stop' commands from the said electronic device.

Further characteristics and advantages will better emerge in the description of a preferred but not exclusive embodiment of dog collar according to the invention, provided in the form of a non-limiting example, with reference to the accompanying drawings, in which:
- figure 1 shows one view of the collar;
- figure 2 shows the collar when worn, and the transmitter device therefor.

With reference to the aforesaid figures, 1 denotes the dog collar as a whole, which comprises, in a monoblock structure, the radio wave receiver station 2 with aerial 3 and relative rechargeable power supply device 4.

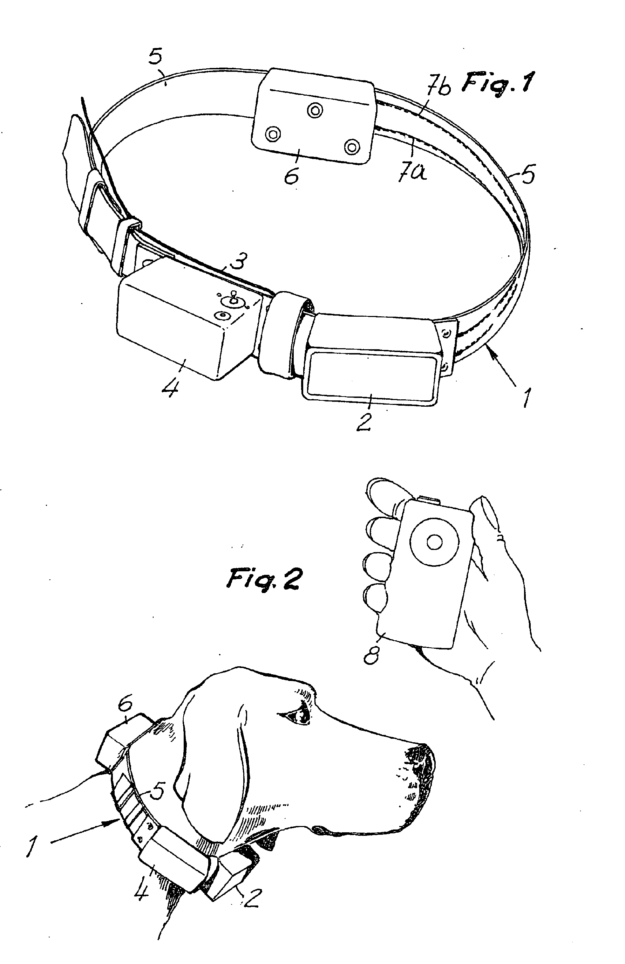

Connected to the said monoblock, by means of the flexible strap 5, is the vibratory device 6 designed to lie in contact with the dog's body, in the preferred position shown in figure 2, and receive 'come' and 'stop' commands via wires 7a and 7b via the receiver station 2 operated by the dog handler by means of the transmitter device 8.

Obviously, the intensity of the vibration generated by the vibrator 6, which is of any type, is designed to send the dog a precise signal, such as, for example, to persuade it return to the handler when the latter, after excessive straying by the dog, activates the transmitter 8, the said action offering, at the same time, absolute respect of the animal's integrity.

According to one variant, the receiver station 2 could be replaced or accompanied by a microphone designed to receive the dog's bark, in order to then transmit, to the vibrator 6, a command which activates the operation thereof in order to persuade the dog to stay silent.

Numerous modifications or variants may be applied to the present invention while remaining within the scope of the invention that characterises it; furthermore, all the parts may be replaced with other, technically equivalent, elements.

## Claims

1. A dog collar, **characterised by** the fact the said collar comprises an electronic device with relative power supply device, connected by means of a flexible strap to a vibratory device designed to lie in contact with the dog's body and receive, via a cable, 'come' and 'stop' commands via the said electronic device.

2. A dog collar according to claim 1, **characterised by** the fact that the said electronic device comprises a radio wave receiver station connected with a transmitter device at the dog handler's disposal.

3. A dog collar according to claim 1, **characterised by** the fact that the said electronic device comprises a microphone designed to receive the dog's barking.
